# EUROPEAN PATENT APPLICATION

(11) **EP 2 824 306 A1**
(43) Date of publication of application: **14.01.2015**
(21) Application number: 12870695.9
(22) Date of filing: 07.03.2012
(51) Int. Cl.: F02D 45/00, F02P 5/152, F02P 5/153

(54) **CONTROL DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: YAGUCHI, Hiroshi, Toyota-shi, Aichi-ken, 471-8571 (JP); SHINODA, Masashi, Toyota-shi, Aichi-ken, 471-8571 (JP); KITAYAMA, Takeshi, Toyota-shi, Aichi-ken, 471-8571 (JP)
(74) Representative: Smith, Samuel Leonard
(86) International application number: PCT/JP2012/055817
(87) International publication number: WO 2013/132613

(57) **Abstract**

An object of the invention is to provide a control device for an internal combustion engine that regularly and forcefully removes deposit that is accumulated in cylinders and restrains consecutive occurrences of pre-ignition beforehand. The internal combustion engine has a low-speed pre-ignition region in which a possibility of occurrence of pre-ignition increases, in a low-rotation and high-load region. Ignition means (16) for igniting an air-fuel mixture taken into the cylinders is included. When an operation region is in a region other than the low-speed pre-ignition region and in a forceful knock enabling region with a load equivalent to or higher than a lower limit load at which knocking can be forcefully generated by advance of ignition timing, the ignition timing by the ignition means is forcefully advanced at a predetermined control interval, and a maximum in-cylinder pressure that is higher than at a time of ordinary combustion in the operation region and is lower than at a time of occurrence of pre-ignition is generated. The control interval is made longer as a load of the operation region is higher, and the control interval is made shorter as the load of the operation region is lower.

## Description

### Technical Field

The present invention relates to a control device for an internal combustion engine, and more particularly relates to a control device for an internal combustion engine that is suitable for executing control of the internal combustion engine that is mounted on a vehicle.

### Background Art

Conventionally, it is known that abnormal combustion (hereinafter, called "pre-ignition") occurs, in which an air-fuel mixture in a cylinder (a combustion chamber) self-ignites before ignition by an ignition plug, in an internal combustion engine that ignites and combusts a mixture of fuel and air by a spark of the ignition plug. Further, it is known that deposit that is accumulated in cylinders is one of the causes of generation of pre-ignition. When pre-ignition occurs, combustion which is more vigorous as compared with ordinary combustion (normal combustion) occurs.

As a deposit removing art for the purpose of restraining an occurrence of preignition, for example, the control device for an internal combustion engine disclosed in Patent Literature 1 is known. The control device for an internal combustion engine disclosed in Patent Literature 1 detects an occurrence of pre-ignition, first. Further, a deposit accumulation amount is estimated, and an ordinary operation time period that is inversely proportional to the deposit estimation amount is set. After an occurrence of pre-ignition is detected, fuel cut control to a cylinder in which pre-ignition occurs, and an ordinarily operation for the above described ordinary operation time period are alternately executed.

Note that the applicant recognizes the literatures described as follows including the above described literature, as the literatures related to the present invention.

### Citation List

### Patent Literatures

Patent Literature 1: Japanese Patent Laid-Open No. 09-222030
Patent Literature 2: Japanese Patent Laid-Open No. 2006-118483
Patent Literature 3: Japanese Patent Laid-Open No. 2007-231741
Patent Literature 4: Japanese Patent Laid-Open No. 2011-111943

### Summary of Invention

### Technical Problem

Incidentally, in a low-rotation and high-load region, a low-speed pre-ignition region in which the possibility of an occurrence of pre-ignition becomes high is present. In the low-speed pre-ignition region, pre-ignition due to the deposit accumulated in cylinders sometimes occurs. Once pre-ignition occurs in a state in which a large amount of deposit is accumulated in cylinders, pre-ignition tends to occur consecutively thereafter. When pre-ignition consecutively occurs, stress more than the material strength guarantee is likely to be given to the members (for example, a piston) that configure the internal combustion engine.

The above described conventional control device for an internal combustion engine estimates the amount of deposit accumulated in cylinders (hereinafter, called "in-cylinder deposit estimation amount"). However, the estimation method measures the time period until pre-ignition occurs. Namely, the in-cylinder deposit estimation amount is measured ex post facto after pre-ignition occurs. Further, the above described conventional control device for an internal combustion engine executes a deposit removal operation in accordance with the in-cylinder deposit estimation amount after pre-ignition occurs. However, a large amount of deposit is already accumulated, and therefore, the consecutive occurrences of pre-ignition mentioned above cannot be restrained by the ex post deposit removal operation like this.

The present invention is made to solve the problem as described above, and an object of the present invention is to provide a control device for an internal combustion engine that regularly and forcefully removes deposit accumulated in cylinders and can restrain consecutive occurrences of pre-ignition beforehand.

### Solution to Problem

A first invention is a control device for an internal combustion engine having a low-speed pre-ignition region in which a possibility of an occurrence of pre-ignition increases, in a low-rotation and high-load region, comprising:
ignition means for igniting an air-fuel mixture taken into a cylinder of the internal combustion engine;
deposit removal control means for forcefully advancing ignition timing by the ignition means at a predetermined control interval to generate a maximum in-cylinder pressure that is higher than at a time of ordinary combustion in an operation region and is lower than at a time of occurrence of pre-ignition, when the operation region is in a region other than the low-speed pre-ignition region and in a forceful knock enabling region with a load equal to or higher than a lower limit load at which knocking can be forcefully generated by advance of the ignition timing; and
control interval correction means for making the control interval longer as the load of the operation region is higher, and making the control interval shorter as the load of the operation region is lower.

A second invention is the control device for an internal combustion engine according to the first invention, further comprising:
control means for executing at least one of control of shortening the control interval, and control of correcting and increasing an advance amount of the ignition timing by the deposit removal control means, when the operation region enters the forceful knock enabling region after an operation in a region with a load lower than a load in the forceful knock enabling region continues for a predetermined time period or more.

A third invention is the control device for an internal combustion engine according to the first or the second inventions, further comprising:
in-cylinder deposit accumulation amount acquisition means for acquiring an in-cylinder deposit accumulation amount; and
control means for executing at least one of control of shortening the control interval, and control of correcting and increasing an advance amount of ignition timing by the deposit removal control means, when the in-cylinder deposit accumulation amount is larger than a threshold value.

A fourth invention is the control device for an internal combustion engine according to any one of the first to third inventions, further comprising:
pre-ignition restraining means for executing at least one of control of restricting a load, and control of making an air-fuel ratio rich, when the operation region enters the low-speed pre-ignition region immediately after an operation in a region with a load lower than a load of the forceful knock enabling region continues for a predetermined time period or more.

### Advantageous Effects of Invention

According to the first invention, in the forceful knock enabling region other than the low-speed pre-ignition region, a large in-cylinder pressure is regularly and forcefully generated, and the deposit accumulated in the cylinders can be removed. Therefore, consecutive occurrences of pre-ignition in the case in which the operation region enters the low-speed pre-ignition region thereafter can be restrained beforehand. Further, according to the first invention, the control interval is made longer as the load of the operation region is higher, and the control interval is made shorter as the load of the operation region is lower. Therefore, the deposit accumulated in the cylinders can be properly removed without giving stress more than required to the members configuring the internal combustion engine.

According to the second invention, an operation in the region with a load lower than in the forceful knock enabling region, namely the region in which deposit removal control cannot be executed continues for a predetermined time period or more, whereby the accumulated deposit can be removed in a short time period.

According to the third invention, the degree of the deposit removal control can be adjusted in accordance with the in-cylinder deposit accumulation amount.

An operation in the region with a load lower than in the forceful knock enabling region, namely, the region in which the deposit removal control cannot be executed continues for a predetermined time period or more, whereby a large amount of deposit is accumulated in the cylinder. According to the fourth invention, even when the operation region enters in the low-speed pre-ignition region in the state in which the deposit removal control is not sufficiently executed, an occurrence of pre-ignition can be restrained.

### Brief Description of Drawings

Figure 1 is a conceptual view for explaining a system configuration of embodiment 1 of the present invention.
Figure 2 is a diagram showing in-cylinder pressure waveforms at a time of ordinary combustion and at a time of abnormal combustion.
Figure 3 is a diagram showing a relation of Pmax or Ps_max, and a deposit removal amount per one time of pre-ignition or knocking.
Figure 4 is a diagram showing the low-speed pre-ignition region and a lower limit load under which deposit removal control is executable.
Figure 5 is a diagram showing a change of thickness of a piston deposit film when the deposit removal control is executed.
Figure 6 is a diagram for explaining a specific example of the second deposit removal control.
Figure 7 is a diagram showing a change of a thickness of a piston deposit film in a case of executing the deposit removal control described in embodiment 1.
Figure 8 is a diagram for explaining a specific example of the third deposit removal control.
Figure 9 is a diagram for explaining about estimation of a deposit thickness from the occurrence frequency of pre-ignition.
Figure 10 is a diagram for explaining about estimation of a deposit thickness from the gain change amount of the in-cylinder pressure sensor.

### Description of Embodiments

Hereinafter, embodiments of the present invention will be described with reference to the drawings. Note that common elements in the respective drawings are assigned with the same reference signs and redundant explanation will be omitted.

### Embodiment 1

### [System Configuration of Embodiment 1]

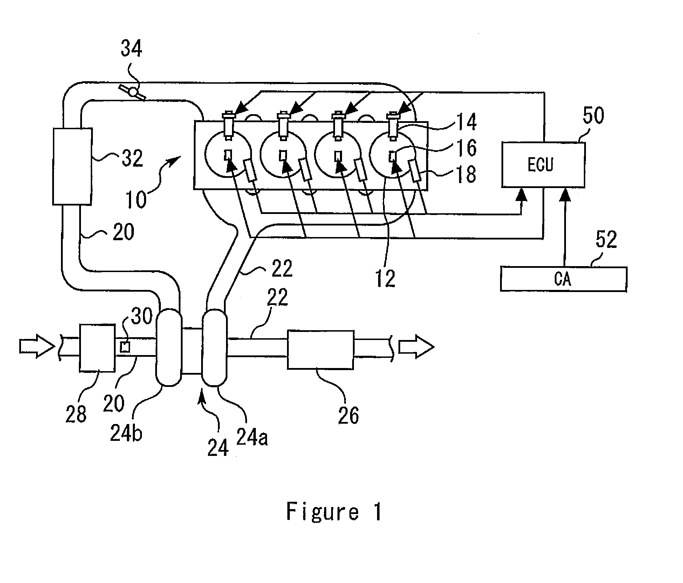

Figure 1 is a conceptual view for explaining a system configuration of embodiment 1 of the present invention. The system shown in Figure 1 includes an internal combustion engine (hereinafter also simply called an engine) 10. The internal combustion engine 10 is an engine that is downsized by supercharging. The internal combustion engine 10 includes a plurality of cylinders 12. The internal combustion engine 10 shown in Figure 1 is of an inline-four engine type, but in the present invention, the number of cylinders and cylinder arrangement are not limited thereto.

Each of the cylinders 12 is provided with an injector 14 that directly injects fuel into the cylinder (a combustion chamber), an ignition plug 16 for igniting an air-fuel mixture, and an in-cylinder pressure sensor 18 that outputs a signal responsive to an in-cylinder pressure. To each of the cylinders 12, an intake passage 20 and an exhaust passage 22 are connected.

An exhaust gas that is discharged from each of the cylinders 12 flows into the exhaust passage 22. The internal combustion engine 10 includes a supercharger 24 that performs supercharging by energy of the exhaust gas. The supercharger 24 includes a turbine 24a that rotates by the energy of the exhaust gas, and a compressor 24b that rotates by being driven by the turbine 24a. The turbine 24a is disposed in the exhaust passage 22. The compressor 24b is disposed in the intake passage 20. A catalyst 26 that purifies a harmful component in the exhaust gas is provided downstream of the turbine 24a.

An air cleaner 28 is provided in a vicinity of an inlet of the intake passage 20. An air flow meter 30 that outputs a signal responsive to a flow rate of air that is taken into the intake passage 20 is provided in a vicinity of the air cleaner 28 downstream of the air cleaner 28. The compressor 24b is provided downstream of the air flow meter 30. An inter-cooler 32 is provided downstream of the compressor 24b. A throttle valve 34 of an electronic control type is provided downstream of the inter-cooler 32.

Fresh air taken in through the air cleaner 28 is compressed in the compressor 24b of the supercharger 24, and thereafter cooled in the inter-cooler 32. The cooled fresh air passes through the throttle valve 34, and is distributed and flows into the respective cylinders 12.

The system of the present embodiment further includes an ECU (Electronic Control Unit) 50. The ECU 50 is configured by an arithmetic processing unit including storage circuits including, for example, a ROM, a RAM and the like. To an input side of the ECU 50, various sensors for detecting an operation state of the internal combustion engine 10 such as a crank angle sensor 52 for detecting a crank angle and a crank angle velocity are connected, besides the in-cylinder pressure sensor 18 and the air flow meter 30 that are mentioned above. To an output side of the ECU 50, various actuators for controlling the operation state of the internal combustion engine 10 such as the injector 14, the ignition plug 16 and the throttle valve 34 that are mentioned above are connected.

The ECU 50 includes a function of storing various data that change in response to the crank angle as a time-series data with the crank angle. The time-series data include outputs of the various sensors, and various indexes, parameters and the like that are calculated based on outputs.

The ECU 50 controls the operation state of the internal combustion engine 10 by driving the various actuators in accordance with a predetermined program based on the outputs of the various sensors. For example, the ECU 50 calculates the crank angle and an engine speed (number of revolutions of the engine) based on the output of the crank angle sensor 52, and calculates an intake air amount based the output of the air flow meter 30. Further, the ECU 50 calculates a load (a load factor) of the engine based on the intake air amount, the engine speed and the like. The ECU 50 calculates a fuel injection amount based on the intake air amount, the load and the like. As a basic amount of the fuel injection amount, a fuel amount that makes an exhaust air-fuel ratio a theoretical air-fuel ratio (stoichiometry) is set, for example. The ECU 50 determines a fuel injection timing and an ignition timing based on the crank angle. When these timings arrive, the ECU 50 drives the injector 14 and the ignition plug 16. Thereby, the air-fuel mixture is combusted in the cylinders, and the internal combustion engine 10 can be operated.

Further, the ECU 50 controls a KCS (Knock Control System). In KCS control, the ignition timing is controlled within a limit at which knocking does not occur. More specifically, the ECU 50 determines whether or not knocking strength that is detected by a knock sensor 54 is a knock threshold value or more. When the knocking strength is the knock threshold value or more, the ECU 50 determines that knocking occurs. When knocking occurs, the ECU 50 delays ignition timing by a predetermined angle within a range without exceeding a delay angle upper limit value to be a cause of a misfire. When knocking does not occur, the ECU 50 advances the ignition timing by a predetermined angle within a range without exceeding an advance angle upper limit value. Note that the knock threshold value is set at a magnitude of trace knock (extremely small knocking with a weak impact wave), for example.

### [Consecutive Occurrences of Pre-ignition Due to Deposit Removal]

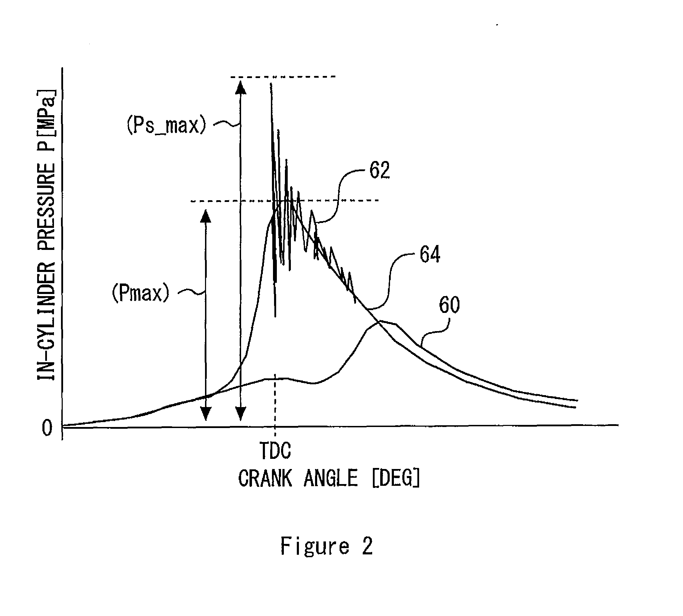

Figure 2 is a diagram showing in-cylinder pressure waveforms at a time of ordinary combustion and at a time of abnormal combustion. Figure 2 shows in-cylinder pressure waveforms in a vicinity of a compression upper dead point. Reference sign 60 designates an in-cylinder pressure waveform at the time of ordinary combustion, reference sign 62 designates a knock waveform at a time of an occurrence of pre-ignition, and reference sign 64 designates an averaged in-cylinder pressure waveform at a time of an occurrence of pre-ignition. The averaged in-cylinder pressure waveform at the time of the occurrence of pre-ignition is a waveform that is obtained by subjecting a knock waveform that vibrates significantly at a high frequency to smoothing processing (averaging processing). Pmax represents a pre-ignition averaged maximum in-cylinder pressure, and Ps_max represents a knock waveform maximum peak value. As shown in Figure 2, at the time of the occurrence of pre-ignition (64), an in-cylinder pressure that is several times as large as the in-cylinder pressure at the time of ordinary combustion (60) occurs.

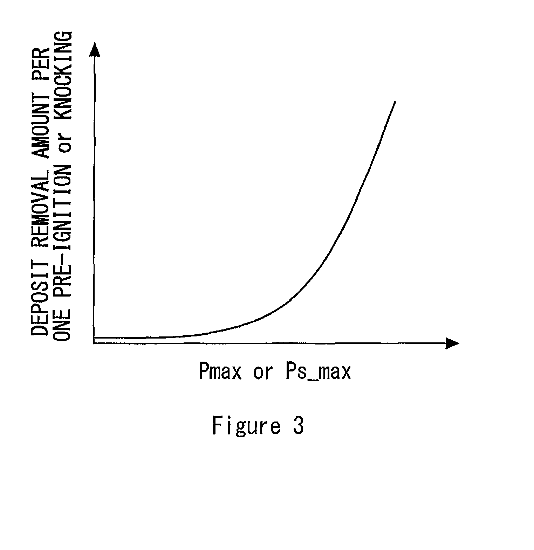

Figure 3 is a diagram showing a relation of Pmax or Ps_max, and a deposit removal amount per one time of pre-ignition or knocking. As shown in Figure 3, as the in-cylinder pressure is higher, the removal amount of deposit accumulated in the cylinder is larger.

Incidentally, the engine downsized by supercharging as in the system of the present embodiment has a low-speed pre-ignition region in which abrupt pre-ignition easily occurs, in a low-rotation and high-load region. The deposits accumulated in the cylinders is one of the causes of occurrence of pre-ignition. At a time of high-load (in-cylinder high temperature) operation of the internal combustion engine 10, the deposit becomes an ignition source, and pre-ignition occurs. The pre-ignition due to the deposit accumulated in the cylinders tends to consecutively occurs with increase in the in-cylinder deposit accumulation amount. Therefore, if the operation region determined by the engine speed and a load enters the low-speed pre-ignition region in a state in which a large amount of deposit is accumulated in the cylinders, pre-ignition is likely to occur consecutively. If pre-ignition occurs consecutively, a damage is likely to be given to the members that configure the internal combustion engine.

### [Characteristic Function in Embodiment 1]

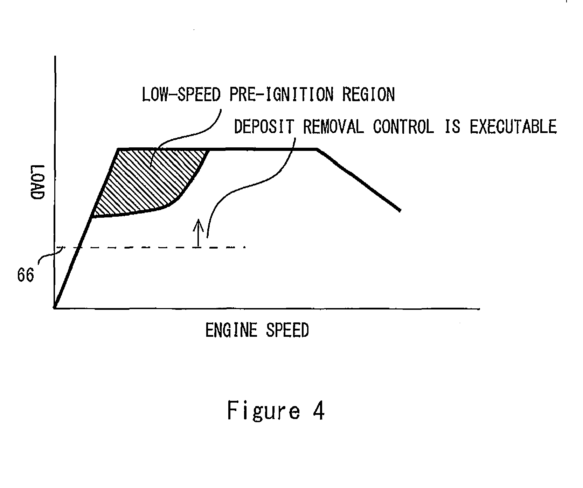

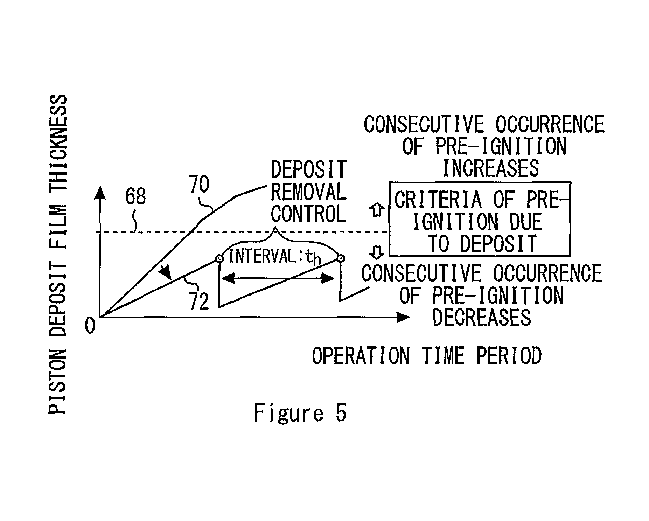

As the countermeasures against the above, in the system of the present embodiment, the deposit accumulated in the cylinders are regularly and forcefully removed, and consecutive occurrences of pre-ignition are restrained beforehand. Hereinafter, a characteristic function of the present embodiment will be described with use of Figure 4 and Figure 5.

Figure 4 is a diagram showing the low-speed pre-ignition region in the system of embodiment 1, and a lower limit load under which deposit removal control is executable. A lower limit load 66 is a lower limit value of the load under which pseudo pre-ignition can be forcefully generated by excessive advance of ignition timing. The lower limit load 66 is lower than the load in the low-speed pre-ignition region. In the present description, the region with a load equivalent to the lower limit load 66 or more will be called a forceful knock enabling region. Here, "the pseudo pre-ignition" mentioned above refers to combustion that generates a maximum in-cylinder pressure that is higher than at the time of ordinary combustion, and is lower than at the time of an occurrence of pre-ignition. The in-cylinder pressure is designed within a guaranteed pressure corresponding to the material strength guarantee value of the piston used in the internal combustion engine 10. "The excessive advance of the ignition timing" mentioned above is an advance larger than the advance amount by KCS control, and is advance that generates pseudo pre-ignition larger than trace knock.

### (Deposit Removal Control Function)

The ECU 50 of the system of the present embodiment includes a deposit removal control function. The deposit removal control function advances ignition timing of the ignition plug 16 forcefully to generate pseudo pre-ignition at predetermined control intervals when the present operation region is in the region other than the low-speed pre-ignition region, and in the forceful knock enabling region with a load equivalent to or more than the lower limit load at which knocking can be forcefully generated by excessive advance of the ignition timing.

According to the deposit removal control function, the deposit accumulated in the cylinders can be regularly and forcefully removed in the region other than the low-speed pre-ignition region. Since the in-cylinder deposit accumulation amount is reduced beforehand, consecutive occurrences of pre-ignition in the case of the operation region entering the low-speed pre-ignition region thereafter can be restrained.

Figure 5 is a diagram showing a change of thickness of a deposit film (hereinafter, simply called a piston deposit film) that adheres to the piston when the aforementioned deposit removal control is executed. A broken line 68 represents a criteria at which pre-ignition due to deposit occurs. When the deposit removal control is not executed (a solid line 70), the thickness of the piston deposit film exceeds the criteria (the broken line 68) in accordance with a lapse of the operation time. When the deposit removal control is executed (the solid line 72), the deposit is removed at predetermined control intervals (tₕ), and the thickness of the deposit is kept at the thickness of the criteria or smaller. Therefore, even when the operation region enters the low-speed pre-ignition region thereafter, consecutive occurrences of pre-ignition are restrained.

### (Control Interval Correction Function)

In the deposit removal control, the ignition timing is excessively advanced at predetermined control intervals, and pseudo pre-ignition is generated. However, from the viewpoint of the material strength guarantee of the members configuring the internal combustion engine 10, fuel efficiency, emission, drivability and the like, the deposit removal control is desirably executed to a necessary and sufficient extent.

Thus, the ECU 50 of the system of the present embodiment further includes a control interval correction function. The control interval correction function corrects the control interval of the deposit removal control in response to a load. The control interval correction function corrects the control interval in such a manner that as the load of the operation region is higher, the control interval is longer, and as the load of the operation region is lower, the control interval is shorter. More specifically, the control interval includes a base value and a correction value. The base value is initially set in advance. The correction value responsive to the load is added to the base value, and the control interval after correction is calculated.

As the load is higher, the impact wave by the pseudo pre-ignition is larger. Since the deposit removal amount per one time is large, it is sufficient if the control interval is set to be long. Further, as the load is lower, the impact wave by the pseudo pre-ignition is smaller. Since the deposit removal amount per one time is small, the number of times of removal of deposit needs to be increased by setting the control interval to be short.

According to the control interval correction function, the deposit accumulated in the cylinders can be properly removed without giving the damage (stress) more than required to the members configuring the internal combustion engine 10.

Incidentally, in the system of embodiment 1 mentioned above, the lower limit load 66 of the forceful knock enabling region is set in order to facilitate explanation. However, the lower limit load may be a value that changes in accordance with the engine speed or the like. Note that the same thing shall apply to the following embodiments in this point.

Further, the engine to which the present invention is applied is not limited to an in-cylinder direct injection engine as in the aforementioned embodiment. The present invention is also applicable to a port-injection type engine. Further, the engine to which the present invention is applied is not limited to the engine with a supercharger having the turbine 24a as in the aforementioned embodiment. The present invention is also applicable to an engine including a supercharger, and a natural aspiration engine. Note that the same shall apply to the following embodiments in this point.

Note that in embodiment 1 mentioned above, the ignition plug 16 corresponds to "ignition means" in the aforementioned first invention.

Further, in this case, "deposit removal control means" in the aforementioned first invention is realized by the ECU 50 including the above described deposit removal control function, and "control interval correction means" in the aforementioned first invention is realized by the ECU 50 including the above described control interval correction function, respectively.

### Embodiment 2

### [System Configuration of Embodiment 2]

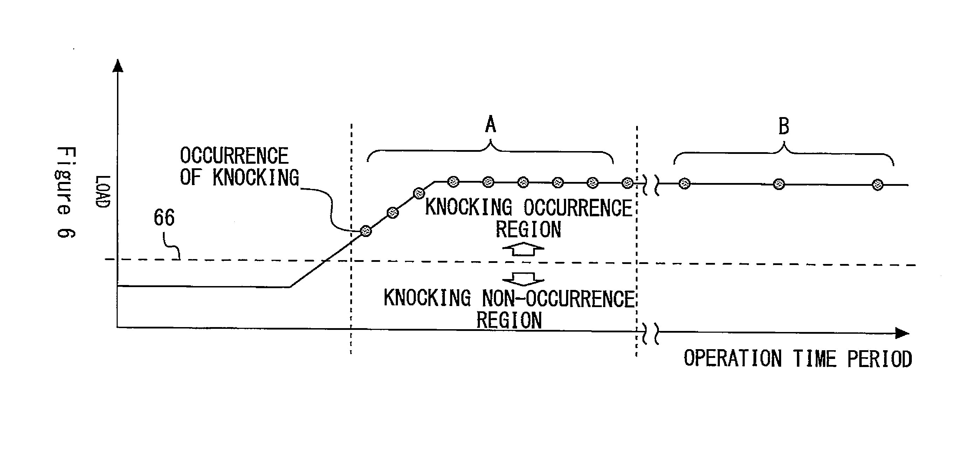

Next, embodiment 2 of the present invention will be described with reference to Figure 6. In a system of the present embodiment, the ECU 50 includes a second deposit removal control function that will be described later, in addition to the configuration of embodiment 1.

### [Characteristic Function in Embodiment 2]

The deposit removal control of embodiment 1 is executed when the load of the operation region is higher than the lower limit load of the forceful knock enabling region. Meanwhile, the deposit removal control is not executed when the load of the operation region is lower than the lower limit load of the forceful knock enabling region. Therefore, if an operation in the lower load region than the forceful knock enabling region, namely, in the region where knocking does not occur continues for a long time period, a large amount of deposit is accumulated in the cylinders.

### (Second Deposit Removal Control Function)

Therefore, the ECU 50 of the system of the present embodiment includes a second deposit removal control function. The second deposit removal control function executes control of at least the following (1) and (2) for a predetermined time period, when the operation region enters the forceful knock enabling region after the operation in the region in which the load is lower than the lower limit load of the forceful knock enabling region, namely, in the region in which deposit removal control cannot be executed continues for a predetermined time period or more.
(1) Control of decreasing the base value of the interval of control that excessively advances ignition timing
(2) Control of correcting and increasing the advance amount of ignition timing by the deposit removal control function

According to the control of (1), the interval of control of excessively advancing ignition timing becomes short, and therefore, frequency of occurrence of pseudo pre-ignition increases. Therefore, the in-cylinder deposit accumulation amount in a short period of time can be reduced. According to the control of (2), the magnitude of knocking becomes large. Therefore, the in-cylinder deposit accumulation amount can be reduced in a short time period. By executing the control of (1) mentioned above, the control of (2), or the controls of both of (1) and (2), consecutive occurrences of pre-ignition in the low-speed pre-ignition region can be restrained beforehand.

Figure 6 is a diagram for explaining a specific example of the control of (1). A region with a load lower than the lower limit load 66 is a region where knocking does not occur even if ignition timing is excessively advanced. When the load increases and exceeds the lower limit load 66 after the operation in this region continues for a predetermined time period or more, deposit removal control based on the control of (1) is executed for a time period A. Thereby, deposit removal control is executed with a high frequency. Therefore, the deposit that is accumulated during the time period in which deposit removal control cannot be executed can be removed in a short time period. After the lapse of the time period A, the base value of the control interval is returned to the value at the initially set time (a time period B).

Incidentally, the ECU 50 of the system of embodiment 2 mentioned above may further include a forbidding function as follows. The forbidding function forbids correction of the control interval by the control interval correction function for a predetermined time period, when the operation region enters the forceful knock enabling region after the operation in the region with the load lower than the load of the forceful knock enabling region continues for a predetermined time period or more.

Note that in embodiment 2 described above, "control means" in the aforementioned second invention is realized by the ECU 50 including the second deposit removal control function.

### Embodiment 3

### [System Configuration of Embodiment 3]

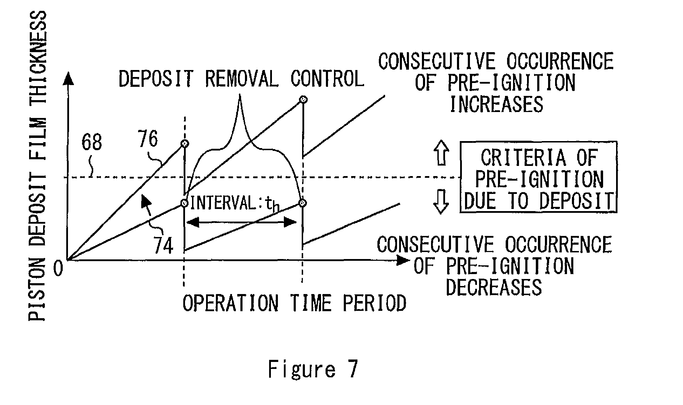

Next, embodiment 3 of the present invention will be described with reference to Figure 7 to Figure 10. In a system of the present embodiment, the ECU 50 includes a third deposit removal control function that will be described later, in addition to the configuration of embodiment 1 or 2.

### [Characteristic Function in Embodiment 3]

Figure 7 is a diagram showing a change of a thickness of a piston deposit film in a case of executing the deposit removal control described in embodiment 1. A broken line 68 represents a criteria at which pre-ignition due to deposit occurs. A solid line 74 expresses a change of a thickness of a piston deposit film at a time of using ordinary fuel, whereas a solid line 76 expresses a change of a thickness of a piston deposit film at a time of using inferior fuel. As shown by the solid line 76, at the time of using inferior fuel, a deposit accumulation amount increases as compared with at the time of using ordinary fuel, and the deposit accumulation amount is likely to exceed the criteria (the broken line 68).

### (Third Deposit Removal Control Function)

Thus, the ECU 50 of the system of the present embodiment includes a third deposit removal control function, and an in-cylinder deposit accumulation amount acquisition function that acquires a cylinder deposit accumulation amount. The third deposit removal control function determines whether or not the in-cylinder deposit accumulation amount acquired by the in-cylinder deposit accumulation amount acquisition function is larger than a threshold value. When the in-cylinder deposit accumulation amount is larger than the threshold value, the ECU 50 executes at least one of the following (1) and (2).
(1) Control of decreasing the base value of the interval of control of excessively advancing ignition timing
(2) Control of correcting and increasing the advance amount of ignition timing by the deposit removal control function

According to the control of (1), the interval of control of excessively advancing ignition timing becomes short, and therefore, the occurrence frequency of pseudo pre-ignition increases. Therefore, as compared with the deposit removal control (embodiment 1) using the base vale at the time of being initially set, a larger amount of deposit can be removed. According to the control of (2), the magnitude of knocking becomes large. Therefore, as compared with the deposit removal control (embodiment 1) using the base value at the time of being initially set, a larger amount of deposit can be removed. By executing the control of (1), the control of (2), or controls of both of (1) and (2), consecutive occurrences of pre-ignition in the low-speed pre-ignition region can be restrained beforehand.

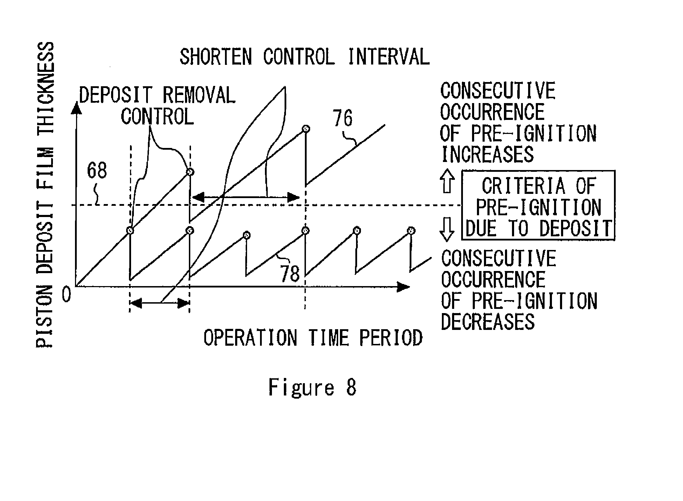

Figure 8 is a diagram for describing a specific example of the control of (1). A solid line 78 expresses a change of a thickness of a piston deposit film in a case of the deposit removal control based on the control of (1) being executed. By making the base value of the control interval small, the occurrence frequency of pseudo pre-ignition increases, and the in-cylinder deposit accumulation amount can be kept at or below the criteria (the broken line 68) (the solid line 78).

Next, the in-cylinder deposit accumulation amount acquisition function to acquire the in-cylinder deposit accumulation amount will be described.

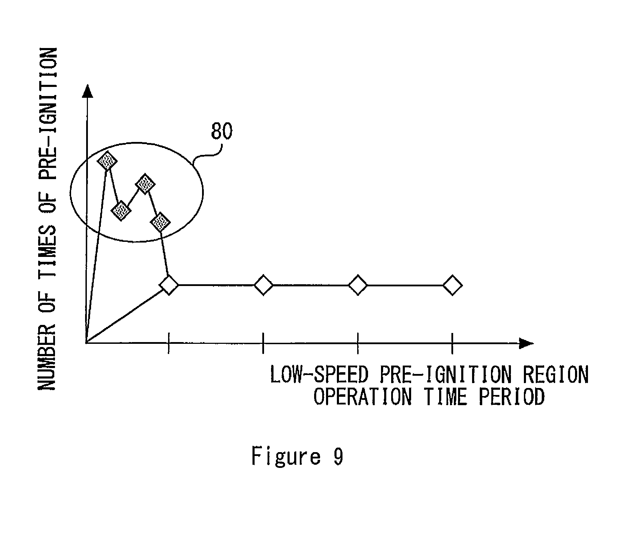

The in-cylinder deposit accumulation amount can be estimated based on an increase rate of the occurrence frequency of pre-ignition, for example. Figure 9 is a diagram for explaining about estimation of a deposit thickness from the occurrence frequency of pre-ignition. When the operation region enters the low-speed pre-ignition region, in a state in which a deposit thickness exceeds the criteria, the occurrence frequency of pre-ignition abruptly increases (80). By occurrence of pre-ignition, the deposit is removed, and when the deposit thickness becomes the criteria or less, the occurrence frequency returns to be constant. Therefore, it can be determined whether or not the deposit thickness is within the criteria, from the occurrence frequency of pre-ignition in a short time period after the operation region enters the low-speed pre-ignition region.

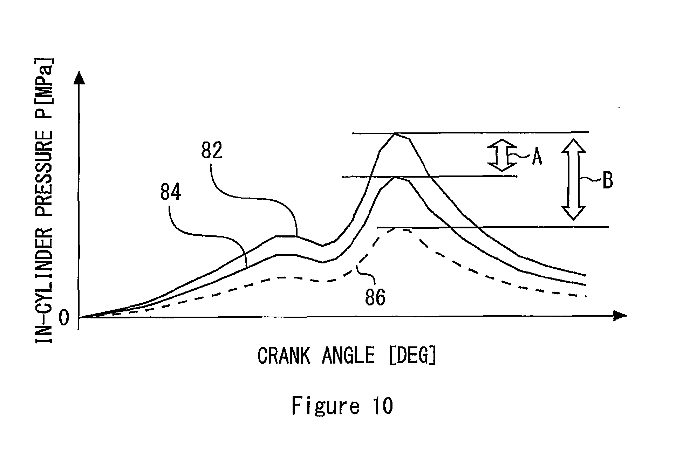

Further, the in-cylinder deposit accumulation amount also can be estimated based a gain change amount of the in-cylinder pressure sensor 18. Figure 10 is a diagram for explaining about estimation of a deposit thickness from the gain change amount of the in-cylinder pressure sensor 18. A solid line 82 represents an in-cylinder pressure waveform at a time of ordinary combustion (at a time of non-accumulation of in-cylinder deposit). A solid line 84 represents an in-cylinder pressure waveform in a case of a deposit thickness being within the criteria, whereas a solid line 86 represents an in-cylinder waveform in a case of the deposit thickness exceeding the criteria. An arrow A represents a gain change amount in the case of the deposit thickness being within the criteria, and an arrow B represents a gain change amount in the case of the deposit thickness exceeding the criteria. Like this, as the deposit thickness becomes larger, the gain change amount tends to change to be larger. Therefore, it can be determined whether or not the deposit thickness is within the criteria from the gain change amount.

Note that in embodiment 3 described above, "in-cylinder deposit accumulation amount acquisition means" in the aforementioned third invention is realized by the ECU 50 including the above described in-cylinder deposit accumulation amount acquisition function, and "control means" in the aforementioned third invention is realized by the ECU 50 including the above described third deposit removal control function, respectively.

### Embodiment 4

### [System Configuration of Embodiment 4]

Next, embodiment 4 of the present invention will be described. In a system of the present embodiment, the ECU 50 includes a pre-ignition restraining function that will be described later, in addition to the configuration of any one of embodiments 1 to 3.

### [Characteristic Function in Embodiment 4]

The deposit removal control in embodiment 1 is executed when the load of the operation region is higher than the lower limit load of the forceful knock enabling region. Meanwhile, the deposit removal control is not executed when the load of the operation region is lower than the lower limit load of the forceful knock enabling region. Therefore, when the operation in the region with the lower load than the forceful knock enabling region, namely, in the region where knocking does not occur continues for a long time period, a large amount of deposit accumulates in the cylinders. When the load abruptly increases thereafter, the operation region enters the low-speed pre-ignition region in a state in which the deposit removal control is not sufficiently executed. In this case, consecutive occurrences of pre-ignition is feared.

Therefore, the ECU 50 of the system of the present embodiment includes the pre-ignition restraining function. The pre-ignition restraining function executes control of at least one of (1) and (2) as follows, when the operation region enters the low-speed pre-ignition region immediately after an operation in the region with a load lower than the lower limit load of the forceful knock enabling region, namely, in the region in which the deposit removal control cannot be executed continues for a predetermined time period or more. Note that "immediately after" means "within a predetermined time period (the time period A in Figure 6) in which the second deposit removal control is executed", for example.
(1) Control of restricting a load
(2) Control of making an air-fuel ratio rich

The control of (1) can be realized by reducing the opening of the throttle valve or the like. By restricting the load, occurrence of pre-ignition is restrained. The control of (2) can be realized by correction by increasing the fuel injection amount. The in-cylinder temperature is reduced by vaporization latent heat of fuel, whereby occurrence of pre-ignition is restrained.

Note that in embodiment 4 mentioned above, "pre-ignition restraining means" in the aforementioned fourth invention is realized by the ECU 50 including the pre-ignition restraining function.

### Reference Signs List

- 10: internal combustion engine (engine)
- 12: cylinders
- 14: injector
- 16: ignition plug
- 18: in-cylinder pressure sensor
- 20: intake passage
- 22: exhaust passage
- 24: supercharger
- 24a: turbine
- 24b: compressor
- 30: air flow meter
- 34: throttle valve
- 50: ECU (Electronic Control Unit)
- 52: crank angle sensor
- 54: knock sensor
- 66: lower limit load

## Claims

1. A control device for an internal combustion engine having a low-speed pre-ignition region in which a possibility of an occurrence of pre-ignition increases, in a low-rotation and high-load region, comprising:
ignition means for igniting an air-fuel mixture taken into a cylinder of the internal combustion engine;
deposit removal control means for forcefully advancing ignition timing by the ignition means at a predetermined control interval to generate a maximum in-cylinder pressure that is higher than at a time of ordinary combustion in an operation region and is lower than at a time of occurrence of pre-ignition, when the operation region is in a region other than the low-speed pre-ignition region and in a forceful knock enabling region with a load equal to or higher than a lower limit load at which knocking can be forcefully generated by advance of the ignition timing; and
control interval correction means for making the control interval longer as the load of the operation region is higher, and making the control interval shorter as the load of the operation region is lower.

2. The control device for an internal combustion engine according to claim 1, further comprising:
control means for executing at least one of control of shortening the control interval, and control of correcting and increasing an advance amount of the ignition timing by the deposit removal control means, when the operation region enters the forceful knock enabling region after an operation in a region with a load lower than a load in the forceful knock enabling region continues for a predetermined time period or more.

3. The control device for an internal combustion engine according to claim 1 or 2, further comprising:
in-cylinder deposit accumulation amount acquisition means for acquiring an in-cylinder deposit accumulation amount; and
control means for executing at least one of control of shortening the control interval, and control of correcting and increasing an advance amount of ignition timing by the deposit removal control means, when the in-cylinder deposit accumulation amount is larger than a threshold value.

4. The control device for an internal combustion engine according to any one of claims 1 to 3, further comprising:
pre-ignition restraining means for executing at least one of control of restricting a load, and control of making an air-fuel ratio rich, when the operation region enters the low-speed pre-ignition region immediately after an operation in a region with a load lower than a load of the forceful knock enabling region continues for a predetermined time period or more.
